# EUROPÄISCHE PATENTSCHRIFT

(11) **EP 1 894 835 B1**
(45) Veröffentlichungstag und Bekanntmachung des Hinweises auf die Patenterteilung: **02.12.2015**
(21) Anmeldenummer: 07114430.7
(22) Anmeldetag: 16.08.2007
(51) Int. Cl.: B60L 11/02, B63H 21/21, B63H 23/28

(54) **Betriebsverfahren für ein Schiff mit Elektroantrieb und Verbrennungskraftmaschinen-Zusatzantrieb sowie zur Durchführung des Verfahrens geeignetes Schiff**
Operating method for a ship with electric propulsion and auxiliary propulsion via combustion engines and ship suitable for implementing the method
Procédé de fonctionnement d'un navire doté d'un entraînement électrique et entraînement auxiliaire de moteurs à combustion interne ainsi que réalisation du procédé adapté au navire

(30) Priorität: 01.09.2006 DE 102006041031
(43) Veröffentlichungstag der Anmeldung: 05.03.2008
(73) Patentinhaber: Siemens Aktiengesellschaft, 80333 München (DE)
(72) Erfinder: Hartig, Rainer, 21614 Buxtehude (DE); Rzadki, Wolfgang, 21509 Glinde (DE); Schmitzer, Richard, 24568 Winsen (DE); Schulze Horn, Hannes, 45966 Gladbeck (DE); Wietoska, Jens, 28201 Bremen (DE)

(56) Entgegenhaltungen:
- EP-A1- 1 426 287
- DE-U1- 29 604 437
- JP-A- 2001 270 495
- JP-U- S61 108 699

## Beschreibung

Die Erfindung betrifft ein Verfahren zum Betrieb eines Schiffes gemäß Oberbegriff des Patentanspruchs 1 sowie ein für die Durchführung des Verfahrens geeignetes Schiff gemäß Patentanspruch 10.

Schiffe mit einem Antriebssystem bestehend aus einem Elektroantrieb und einem Verbrennungskraftmaschinen-Zusatzantrieb werden in Zukunft insbesondere im Navy-Bereich für Korvetten und Fregatten verstärkt Anwendung finden. Hierbei dienen ein oder mehrere Elektromotoren als Hauptmaschinen zum Antrieb des Schiffes für einen unteren Geschwindigkeitsbereich (z.B. bis einschließlich Marschfahrt) und zumindest eine Verbrennungskraftmaschinen wie z.B. eine Gasturbine alleine oder mit dem (den) Elektromotor(en) als Zusatzantrieb für einen höheren Geschwindigkeitsbereich (z.B. Geschwindigkeiten größer als Marschfahrt) bis zur Höchstgeschwindigkeit. Alternativ können als Zusatzantrieb statt einer Gasturbine beispielsweise auch ein oder mehrere Dieselmotoren vorgesehen sein.

Das Antriebssystem ist somit zu unterscheiden von dem bei großen Cargoschiffe, insbesondere bei großen Containerschiffen, eingesetzten Antriebssystemen mit einer Verbrennungskraftmaschine, üblicherweise einem großen Dieselmotor, als Hauptmaschine zum Antrieb des Schiffes und einem elektrischen Wellenmotor (in der Fachliteratur häufig als "Booster" bezeichnet) als elektrischem Zusatzantrieb zum Erreichen der Höchstgeschwindigkeit Schiffes oder als Notantrieb bei Ausfall der Verbrennungskraftmaschine.

Ein Beispiel für ein Antriebssystem, in dem zwei Elektromotoren als Hauptmaschinen zum Antrieb des Schiffes und als Verbrennungskraftmaschinen-Zusatzantrieb eine Gasturbine verwendet wird, ist das in der Fachliteratur als CODLAG (COmbined Diesel ELectric And Gas) bezeichnete Antriebssystem. Ein CODLAG-Antriebssystem soll beispielsweise für die neuen Fregatten Klasse F 125 der deutschen Marine Verwendung finden (siehe z.B. Aufsatz "Fregatte Klasse F 125" von T. Becker in "Marineforum" 11-2005). Bis zur Marschfahrt von ca. 20 kn treiben hierbei zwei Elektromotoren jeweils eine Propellerwelle direkt ohne Getriebeuntersetzung an. Ein mechanischer Gasturbinenantrieb wird auf die beiden Propellerwellen zugeschaltet, um die Höchstgeschwindigkeit von ca. 26 kn zu erreichen.

Die Stromerzeugung für die Elektromotoren und für das Bordnetz des Schiffes erfolgt üblicherweise durch mehrere Stromerzeugungsaggregate, die jeweils aus einem Stromgenerator und einer diesen antreibenden Hilfsmaschine, wie z.B. einem mittel schnell laufenden Dieselmotor, bestehen.

Bei der Fregatte F 125 sind beispielsweise vier Stromerzeugungsaggregate von jeweils ca. 3 MW vorgesehen, so dass insgesamt eine Generatorleistung von 12 MW für die zwei Elektromotoren und die weiteren elektrischen Verbraucher zur Verfügung steht. Der Leistungsbedarf der elektrischen Verbraucher beträgt etwa 1 MW. Die Elektromotoren sind auf eine Leistung von jeweils ca. 4.5 MW ausgelegt, so dass die Gesamtleistung des Elektroantriebs ca. 9 MW beträgt. Die Gasturbine hat eine Leistung von 20 MW. Da die Höchstgeschwindigkeit nur relativ selten gefordert wird, stehen auf der Antriebsseite große Energiereserven zur Verfügung, die häufig nicht genutzt werden. Auch auf der Bordnetzseite stehen häufig Energiereserven zur Verfügung, die nicht genutzt werden.

Es ist deshalb Aufgabe vorliegender Erfindung, ein Verfahren zum Betrieb eines eingangs erläuterten Schiffes und ein für die Durchführung des Verfahrens geeignetes Schiff anzugeben, mit denen diese Energiereserven nutzbar gemacht werden können.

Die Lösung der auf das Verfahren gerichteten Aufgabe gelingt dadurch, dass der zumindest eine Elektromotor auch als Generator betreibbar ist, wodurch ein hinsichtlich seiner Richtung änderbarer Energiefluss zwischen dem Bordnetz und der Wellenanlage herstellbar ist, und dass durch Steuerung der Richtung und Größe dieses Energieflusses eine für das Bordnetz benötigte Mindestleistung bereitgestellt und dabei gleichzeitig auch die für den Vortrieb des Schiffes situationsbedingt benötigte Mindestantriebsleistung für den Schiffpropeller bereitgestellt wird.

Der hinsichtlich seiner Richtung änderbare Energiefluss zwischen dem Bordnetz und der Wellenanlage eröffnet eine bisher nicht bekannte Flexibilität in der Energieverteilung im Zusammenspiel der Energieerzeugung für den Antrieb des Schiffes und der Energieerzeugung für das Bordnetz. Durch einen Energiefluss von der Wellenanlage zu dem Bordnetz können bestehende Energiereserven auf der Antriebsseite auf der Bordnetzseite nutzbar gemacht werden. So kann bei Ausfall von Stromerzeugungsaggregaten eine ausreichende Versorgung elektrischer Verbraucher des Bordnetzes mit elektrischer Energie sichergestellt und es können somit Bordnetzstörungen bis hin zu einem Blackout des Schiffes vermieden werden.

Bei einem Schiff mit zwei Wellenanlagen, für die als Zusatzantrieb gemeinsam eine einzige Verbrennungskraftmaschine oder jeweils eine eigene Verbrennungskraftmaschine vorgesehen ist, können bei einem Ausfall des Zusatzantriebs für eine der beiden Wellenanlagen (z.B. aufgrund einer Getriebestörung) bestehende Energiereserven auf Seite der ungestörten Wellenanlage zur zusätzlichen Energieversorgung für den Elektromotor der gestörten Wellenanlage genutzt werden. Umgekehrt können bestehende Energiereserven auf der Bordnetzseite flexibel zum Antrieb einer oder mehrerer Wellenanlagen des Schiffes genutzt werden, wodurch die zumindest eine Verbrennungskraftmaschine entlastet werden kann. Mit diesen Maßnahmen kann die Betriebssicherheit des Schiffes weiter erhöht werden.

Zum anderen können durch den nunmehr möglichen Energieaustausch zwischen Bordnetz und Wellenanlage die Energieerzeuger, d.h. die zumindest eine Verbrennungskraftmaschine und die Hilfsmaschinen zum Antrieb der Stromgeneratoren, gezielt zusätzlich belastet oder entlastet und somit deren Betriebsparameter wie z.B. Treibstoffverbrauch, Emissionen oder Laufzeiten, beeinflusst werden. Derartige Beeinflussungsmöglichkeiten können in besonderen Einsatzfällen wünschenswert sein, zum Beispiel bei Vorliegen besonderer Anforderungen hinsichtlich der Einsatzdauer, der Betriebskosten, der Detektierbarkeit des Schiffes oder der Höchstwerte für Abgasemissionen.

Die mit der Erfindung gegebene Energieaustauschmöglichkeit zwischen Bordnetz und Antrieb kann auch zur Vermeidung unnötiger Leistungsreserven bei den Energieerzeugern genutzt werden, wodurch die Anschaffungskosten für die installierte Maschinenleistung reduziert werden kann.

Die Größe des Energieflusses und somit der Energieaustausch ist nur dadurch begrenzt, dass in jedem Fall eine für das Bordnetz benötigte Mindestleistung bereitgestellt und dabei gleichzeitig auch die für den Vortrieb des Schiffes situationsbedingt benötigte Mindestantriebsleistung für den Schiffpropeller bereitgestellt werden muss.

Durch Steuerung der Richtung und Größe des Energieflusses kann das Gesamtsystem bestehend aus der zumindest einen Verbrennungskraftmaschine und von Hilfsmaschinen zum Antrieb der Stromgeneratoren gezielt in einem vorgebbaren Betriebspunkt betrieben werden.

Der vorgebbare Betriebspunkt kann von Vorteil ein Betriebspunkt sein, in dem der Treibstoffbedarf des Gesamtsystems minimal ist. Hierdurch können beispielsweise der Treibstoffverbrauch und somit auch die Treibstoffkosten verringert werden. Bei gleicher Treibstoffmenge kann die Fahrtstrecke vergrößert oder bei gleich bleibender Fahrtstrecke die benötigte Treibstoffmenge und somit auch der Platzbedarf für Tanks und Gewicht verringert werden.

Der vorgebbare Betriebspunkt kann aber auch von Vorteil ein Betriebspunkt sein, in dem die Geräuschemissionen und/oder die Wärmeemissionen des Gesamtsystems minimal sind. In einem derartigen Betriebspunkt kann beispielsweise die Detektierbarkeit des Schiffes, z.B. bei einer Patrouillenfahrt, erschwert werden.

Weiterhin kann der vorgebbare Betriebspunkt von Vorteil ein Betriebspunkt sein, in dem die Abgasemissionen des Gesamtsystems minimal sind. In einem derartigen Betriebspunkt kann dann ein Einsatz des Schiffes auch in ökologisch sensiblen Gebieten ermöglicht werden. Insbesondere beim Hafenzugangsbetrieb bestehen schon heute in vielen Häfen besondere Anforderungen an die Abgasemissionen.

Der vorgebbare Betriebspunkt kann aber auch ein Betriebspunkt sein, in dem die Laufzeiten der Hilfsmaschinen und/oder der Verbrennungskraftmaschine und somit der hierfür benötigte Wartungsaufwand minimal sind.

Der vorgebbare Betriebspunkt kann auch durch mehrere Betriebsparameter charakterisiert sein, wobei den Betriebsparametern jeweils Prioritäten zugeordnet sind und in dem vorgebbaren Betriebspunkt die Betriebsparameter in der Reihenfolge ihrer Priorität optimiert sind. Bevorzugt umfassen die Betriebsparameter hierbei den Treibstoffbedarf und/oder die Abgasemissionen und/oder die Geräuschemissionen und/oder die Wärmeemissionen und/oder die Maschinenlaufzeiten in dem Gesamtsystem bestehend aus der zumindest einen Verbrennungskraftmaschine und den Hilfsmaschinen. Beispielsweise gilt erste Priorität für eine möglichst niedrige Abgasemission des Gesamtsystems, zweite Priorität einem möglichst niedrigen Treibstoffverbrauch des Gesamtsystems und dritte Priorität für möglichst geringe Laufzeiten der Hilfsmaschinen in dem Gesamtsystem.

Bevorzugt wird bei Motorbetrieb des Elektromotors und einem Ausfall eines Stromgenerators der Elektromotor so schnell in den Generatorbetrieb umgeschaltet, dass in dem Bordnetz die elektrische Bordnetzenergie ohne Blackout des Bordnetzes, vorzugsweise sogar völlig unterbrechungsfrei, aufrechterhalten wird. Hierdurch kann die Betriebssicherheit noch weiter erhöht werden.

Bei einem zur Durchführung des Verfahrens geeigneten Schiff gemäß Oberbegriff des Patentanspruchs 10 ist erfindungsgemäß der Elektromotor auch als Generator betreibbar, wodurch ein hinsichtlich seiner Richtung änderbarer Energiefluss zwischen dem Bordnetz und der Wellenanlage herstellbar ist, und das Schiff weist eine Steuereinrichtung zur Steuerung der Richtung und Größe dieses Energieflusses auf.

Von Vorteil weist die Steuereinrichtung ein Steuerprogramm mit Programmteilen zur Einstellung jeweils unterschiedlicher vorgebbarer Betriebspunkte des Gesamtsystems bestehend aus der zumindest einen Verbrennungskraftmaschine und von Hilfsmaschinen zum Antrieb der Stromgeneratoren auf.

Von Vorteil umfassen die vorgebbaren Betriebspunkte einen Betriebspunkt, in dem der Treibstoffbedarf des Gesamtsystems minimal ist. Bevorzugt umfassen die vorgebbaren Betriebspunkte auch einen Betriebspunkt, in dem die Geräuschemissionen und/oder die Wärmeemissionen des Gesamtsystems minimal sind Weiterhin können die vorgebbaren Betriebspunkte einen Betriebspunkt umfassen, in dem die Abgasemissionen des Gesamtsystems minimal sind. Vorzugsweise umfassen die vorgebbaren Betriebspunkte auch einen Betriebspunkt, in dem die Laufzeiten der Hilfsmaschinen und/oder der Verbrennungskraftmaschine minimal sind. Die im Zusammenhang mit dem erfindungsgemäßen Verfahren genannten Vorteile der verschiedenen Betriebspunkte gelten entsprechend auch für das erfindungsgemäße Schiff.

Bevorzugt kann die Steuereinrichtung zur Steuerung der Richtung und Größe des Energieflusses steuernd auf den Betrieb des Elektromotors, der Verbrennungskraftmaschine, von Hilfsmaschinen zum Antrieb der Stromgeneratoren, einer Kupplung zwischen Verbrennungskraftmaschine und Wellenanlage, vorzugsweise auch auf einen Verstellantrieb für die Steigung der Blätter des Schiffpropellers, einwirken.

Von Vorteil ist das Schiff als Fregatte oder Korvette ausgebildet.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: ein erstes Ausführungsbeispiel eines erfindungsgemäßen Schiffes,
- FIG 2: ein zweites Ausführungsbeispiel eines erfindungsgemäßen Schiffes und
- FIG 3: einen Verfahrensablauf zur Einstellung eines vorgebbaren optimalen Betriebspunktes bei dem Schiff gemäß FIG 1.

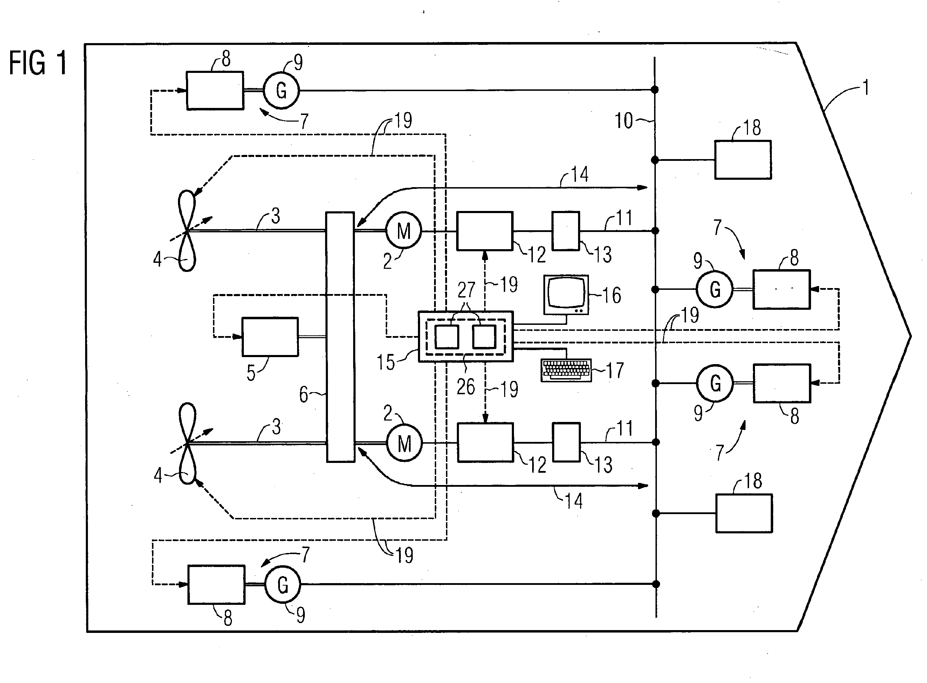

Ein in FIG 1 gezeigtes Schiff 1, beispielsweise eine Fregatte oder eine Korvette, weist ein Antriebssystem mit zwei Elektromotoren 2 auf, von denen jeder direkt, d.h. ohne ein zwischengeschaltetes Getriebe, jeweils eine Propellerwelle 3 antreibt, die wiederum mit einem verstellbaren Schiffpropeller 4 gekoppelt ist. Die Elektromotoren 2 dienen als Hauptantrieb für den Vortrieb des Schiffes 1 im unteren Geschwindigkeitsbereich (z.B. Geschwindigkeiten bis einschließlich Marschfahrt). Eine Gasturbine 5 dient alleine oder mit den Elektromotoren 2 als Zusatzantrieb für den höheren Geschwindigkeitsbereich (z.B. Geschwindigkeiten größer als Marschfahrt) bis hin zur Erzielung der Höchstgeschwindigkeit. Die Gasturbine 5 kann bei Bedarf über eine Getriebe-/Kupplungseinheit 6 mechanisch mit den Propellerwellen 3 gekuppelt werden.

Ein Bordnetz 10 dient zur Versorgung der Elektromotoren 2 sowie weiterer elektrischer Verbraucher 20 (z.B. Querstrahlruder, Beleuchtung, Navigationssysteme) mit elektrischer Energie. Aus Gründen der Übersichtlichkeit sind in FIG 1 nur zwei elektrische Verbraucher 20 dargestellt, in der Praxis werden eine größere Anzahl derartiger Verbraucher 20, teilweise auch über weitere Bordnetze, aus dem Bordnetz 10 mit elektrischer Energie versorgt.

Die Erzeugung der elektrischen Energie für das Bordnetz 10 und somit auch für die Elektromotoren 2 erfolgt durch mehrere Stromerzeugungsaggregate 7, die jeweils aus einem Dieselmotor 8 und einem von dem Dieselmotor 8 angetriebenen Stromgenerator 9 bestehen. Als Dieselmotoren 8 kommen beispielsweise mittel schnell laufende Viertakt-Dieselmotoren zum Einsatz.

Jeder der Elektromotoren 2 ist über eine elektrische Leitung 11 mit dem Bordnetz 10 verbunden, wobei in die Leitung 11 ein Umrichter 12 und ein Transformator 13 geschaltet sind. Im Motorbetrieb des Elektromotors 2 versorgt der Umrichter 12 den Elektromotor 2 mit elektrischer Energie aus dem Bordnetz 10. Im Generatorbetrieb des Elektromotors 2 wandelt der Umrichter 12 den von dem Elektromotor 2 erzeugten Strom in Strom mit der Frequenz des Bordnetzes 10 um.

Mit Hilfe jedes der Elektromotoren 2 ist ein hinsichtlich seiner Richtung änderbarer Energiefluss 14 zwischen dem Bordnetz 10 und der jeweils zugehörigen Propellerwelle 3 herstellbar. Bei Motorbetrieb entsteht durch Umwandlung zumindest eines Teils der elektrischen Bordnetzenergie in mechanische Energie zum Antrieb der Propellerwelle ein Energiefluss 14 von dem Bordnetz 10 zu der Propellerwelle 3 und bei Generatorbetrieb durch Umwandlung zumindest eines Teils der mechanischen Energie der Propellerwelle 3 in elektrische Energie zur Einspeisung in das Bordnetz 3 ein Energiefluss 14 von der Propellerwelle 3 zu dem Bordnetz 10.

Eine elektronische Steuereinrichtung 15 dient zur Steuerung der Richtung und Größe der Energieflüsse 14. Die Steuereinrichtung 15 kann hierzu über Steuerleitungen 19 steuernd auf den Betrieb der Elektromotoren 2, der Umrichter 12, der Gasturbine 5, der Dieselmotoren 8, der Getriebe-/Kupplungseinheit 6 und auf nicht näher dargestellte Verstellantriebe für die Steigung der Blätter der Propeller 4 einwirken. Die Steuereinrichtung 15 weist ein Steuerprogramm 26 mit mehreren Programmteilen 27 zur Einstellung jeweils unterschiedlicher vorgebbarer Betriebspunkte des Gesamtsystems bestehend aus der Gasturbine 5 und den Dieselmotoren 8 auf. Die Steuereinrichtung 15 ist hierbei bevorzugt in ein nicht näher dargestelltes Power-Management-System des Schiffes 1 integriert.

Die Steuereinrichtung 15 steuert nun die Energieflüsse 14 derart, dass eine für das Bordnetz 10 benötigte Mindestleistung bereitgestellt und dabei gleichzeitig auch die für den Vortrieb des Schiffes situationsbedingt benötigte Mindestantriebsleistung für die Propeller 4 bereitgestellt wird. Durch die Steuerung der Richtung und Größe der Energieflüsse 14 wird hierbei das Gesamtsystem bestehend aus der Gasturbine 5 und den Dieselmotoren 8 in einem vorgebbaren, optimalen Betriebspunkt betrieben.

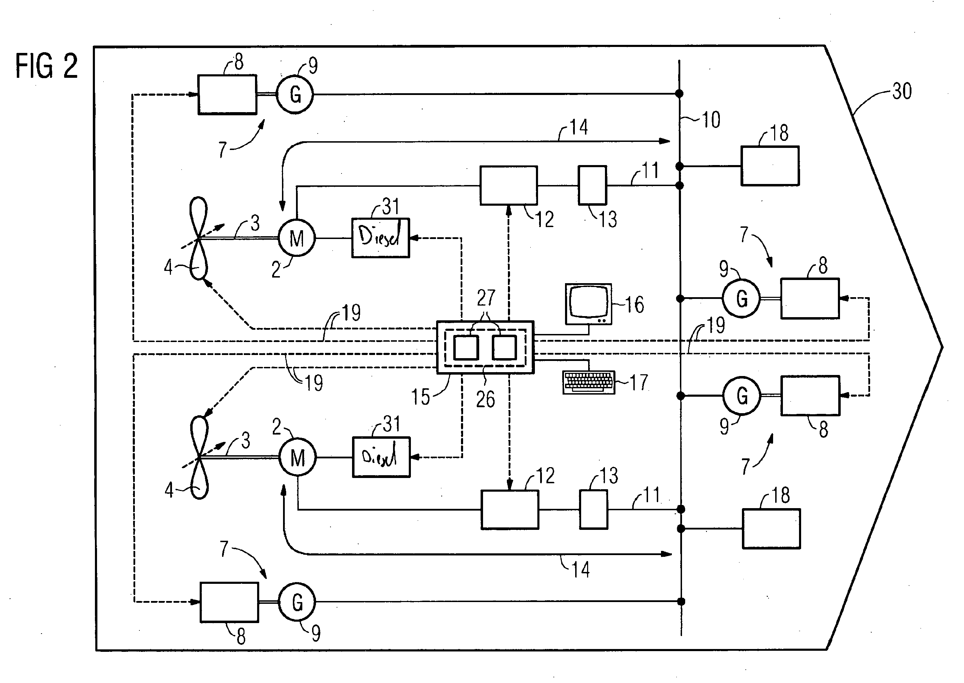

Statt einer Gasturbine können beispielsweise auch ein oder mehrere Dieselmotoren als Zusatzantrieb vorgesehen sein. So zeigt FIG 2 ein Schiff 30, das dem Schiff 1 aus FIG 1 entspricht, mit der Ausnahme dass als Zusatzantrieb statt einer Gasturbine nun für jede der Propellerwellen 3 als Zusatzantrieb für höhere Geschwindigkeiten ein Dieselmotor 31 vorhanden ist, der direkt mit der Propellerwelle 3 kuppelbar ist.

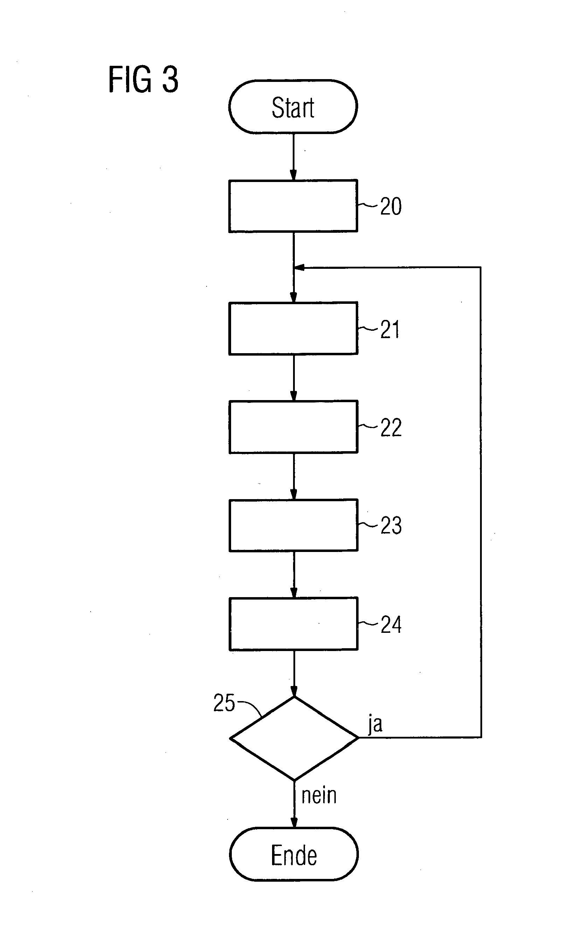

Beim Betrieb des Schiffes 1 (bzw. in entsprechender Form auch bei dem Schiff 30) werden, wie in Figur 3 dargestellt, nach einer Aktivierung der Steuereinrichtung 15 in einem ersten Schritt 20 von der Steuereinrichtung 15 vom Schiffspersonal zu optimierende Betriebsparameter abgefragt. Dies kann beispielsweise mit Hilfe eines auf einer Ausgabeeinheit 16, z.B. eines Displays, angezeigten Auswahlmenüs erfolgen. Das Schiffspersonal kann anschließend über eine Eingabeeinheit 17, z.B. eine Tastatur, einen oder mehrere der angezeigten Betriebsparameter auswählen und den ausgewählten Betriebsparametern Prioritäten zuordnen. Alternativ können die zu optimierenden Betriebsparameter auch bereits fest in der Steuereinrichtung 15 abgespeichert sein.

Anschließend erfasst die Steuereinrichtung in einem Schritt 21 den aktuellen Mindestenergiebedarf für den Antrieb der Schiffpropeller 3 und für die elektrischen Verbraucher 18. Der aktuelle Mindestenergiebedarf kann beispielsweise anhand der aktuellen Leistungsabgaben der Stromgeneratoren 9 sowie des von der Brücke gewünschten Drehzahlsollwertes für die Schiffpropeller ermittelt werden.

Anschließend werden in einem Schritt 22 die aktuellen Betriebspunkte der Gasturbine 5 und der Dieselmotoren 8 hinsichtlich der zu optimierenden Betriebsparameter und daraus der aktuelle Betriebspunkt des Gesamtsystems aus Gasturbine 5 und Dieselmotoren 8 hinsichtlich der zu optimierenden Betriebsparameter ermittelt. Die Bestimmung der Betriebspunkte bzw. der zu optimierenden Betriebsparameter erfolgt entweder direkt durch Messung der Betriebsparameter der Gasturbine 5 und der Dieselmotoren 8, z.B. deren Treibstoffverbrauch, oder indirekt durch Ableitung dieser Betriebsparameter aus anderen gemessenen Betriebsparametern.

Daraufhin wird in einem Schritt 23 von der Steuereinrichtung 15 ein optimaler Betriebspunkt des Gesamtsystems ermittelt, bei dem die für das Bordnetz 10 benötigte Mindestleistung und gleichzeitig auch die für den Vortrieb des Schiffes situationsbedingt benötigte Mindestantriebsleistung bereitgestellt wird und gleichzeitig die Betriebsparameter für das Gesamtsystem in der Reihenfolge ihrer Priorität optimiert sind. Hierzu sind in der Steuereinrichtung 15 für jeden der Dieselmotoren 8 und für die Gasturbine 5 Daten abgespeichert, die den Zusammenhang der Energieabgabe mit den jeweiligen Betriebsparametern, z.B. dem jeweiligen Treibstoffverbrauch, Emission oder Laufzeit angeben.

Bestehen hinsichtlich der zu optimierenden Betriebsparameter Abweichungen zwischen dem optimalen und dem aktuellen Betriebspunkt des Gesamtsystems können diese dem Schiffspersonal in einem Schritt 24 auf der Ausgabeeinheit 16 angezeigt und somit das Schiffspersonal, z.B. durch Ausgabe von Handlungsempfehlungen, zur Einstellung der optimalen Richtung und Größe der Energieflüsse 14 von dem Bordnetz 10 zu den Propellerwellen 3 oder umgekehrt und somit zur Heranführung des Betriebspunktes des Gesamtsystems an den optimalen Betriebspunkt veranlasst werden. Wenn ein bestimmter Grenzwert für die Abweichungen überschritten wird, kann von der Steuereinrichtung 15 auch ein Warnsignal an ein Alarmsystem gegeben werden.

Alternativ kann die Steuereinrichtung 15 in dem Schritt 24 auch selbständig und automatisiert durch entsprechende Steuerung der Energieflüsse 14 zwischen den Propellerwellen 3 und dem Bordnetz 10 den Betriebspunkt des Gesamtsystems an den gewünschten optimalen Betriebspunkt heranführen. Die Steuereinrichtung 15 greift hierzu über die Steuerleitungen 19 steuernd auf den Betrieb der Elektromotoren 2, der Umrichter 12, der Gasturbine 5, der Dieselmotoren 8, der Getriebe-/Kupplungseinheit 6 und der nicht näher dargestellte Verstellantriebe für die Steigung der Blätter der Propeller 4 ein und steuert hierüber die Leistungsabgaben und somit Betriebspunkte der Dieselmotoren 8 und der Gasturbine 5, die Stromflüsse durch die Umrichter 12 und somit die Energieflüsse 14 derart, dass die zu optimierenden Betriebsparameter in der Reihenfolge ihrer Priorität optimiert werden.

Von der Steuereinrichtung 15 wird nun, solange im Schritt 25 Bedarf nach einer weiteren Optimierung erkannt wird und - wie in Figur 2 durch einen Rücksprung von Schritt 25 auf Schritt 21 verdeutlicht ist - laufend der aktuelle Energiebedarf ermittelt, bei Änderungen des Energiebedarfs der optimale Betriebspunkt ermittelt und anschließend Abweichungen des aktuellen Betriebspunktes dem Schiffspersonal anzeigt oder selbständig durch entsprechende Steuerung der Energieflüsse 14 ein optimaler Betriebspunkt für das Gesamtsystem eingestellt. Mit Hilfe einer selbstlernenden Struktur in der Steuereinrichtung 15 können noch weitere Optimierungen erfolgen. Wenn kein weiterer Optimierungsbedarf im Schritt 25 erkannt wird, wird das Verfahren beendet.

## Patentansprüche

1. Verfahren zum Betrieb eines Schiffes (1) mit
- zumindest einem Elektromotor (2) als Hauptmaschine zum Antrieb des Schiffes (1), wobei der Elektromotor (2) eine Wellenanlage (3) antreibt, die mit einem Schiffpropeller (4) gekuppelt ist
- zumindest einer mit der Wellenanlage (3) kuppelbaren Verbrennungskraftmaschine (5), insbesondere einer Gasturbine oder einem oder mehreren Dieselmotoren, als Zusatzantrieb zur Erreichung der Höchstgeschwindigkeit des Schiffes (1),
- einem elektrischen Bordnetz (10), durch das der zumindest eine Elektromotor (2) und weitere elektrische Verbraucher (18) des Schiffes (1) mit elektrischer Energie versorgt werden und
- Stromgeneratoren (9) zur Erzeugung elektrischer Energie für das Bordnetz (10),
**dadurch gekennzeichnet, dass** der zumindest eine Elektromotor (2) auch als Generator betreibbar ist, wodurch ein hinsichtlich seiner Richtung änderbarer Energiefluss (14) zwischen dem Bordnetz (10) und der Wellenanlage (3) herstellbar ist, und dass durch Steuerung der Richtung und Größe dieses Energieflusses (14) eine für das Bordnetz (10) benötigte Mindestleistung bereitgestellt und dabei gleichzeitig auch die für den Vortrieb des Schiffes situationsbedingt benötigte Mindestantriebsleistung für den Schiffpropeller (4) bereitgestellt wird.

2. Verfahren nach Anspruch 1,
**dadurch gekennzeichnet, dass** durch Steuerung der Richtung und Größe des Energieflusses (14) das Gesamtsystem bestehend aus der zumindest einen Verbrennungskraftmaschine (5) und von Hilfsmaschinen (8) zum Antrieb der Stromgeneratoren (9) in einem vorgebbaren Betriebspunkt betrieben wird.

3. Verfahren nach Anspruch 2,
**dadurch gekennzeichnet, dass** der vorgebbare Betriebspunkt ein Betriebspunkt ist, in dem der Treibstoffbedarf des Gesamtsystems minimal ist.

4. Verfahren nach Anspruch 2,
**dadurch gekennzeichnet, dass** der vorgebbare Betriebspunkt ein Betriebspunkt ist, in dem die Geräuschemissionen und/oder die Wärmeemissionen des Gesamtsystems minimal sind

5. Verfahren nach Anspruch 2,
**dadurch gekennzeichnet, dass** der vorgebbare Betriebspunkt ein Betriebspunkt ist, in dem die Abgasemissionen des Gesamtsystems minimal sind.

6. Verfahren nach Anspruch 2,
**dadurch gekennzeichnet, dass** der vorgebbare Betriebspunkt ein Betriebspunkt ist, in dem die Laufzeiten der Hilfsmaschinen (8) und/oder der Verbrennungskraftmaschine (5) minimal sind.

7. Verfahren nach Anspruch 2,
**dadurch gekennzeichnet, dass** der vorgebbare Betriebspunkt durch mehrere Betriebsparameter charakterisiert wird, wobei den Betriebsparametern jeweils Prioritäten zugeordnet und in dem vorgebbaren Betriebspunkt die Betriebsparameter in der Reihenfolge ihrer Priorität optimiert sind.

8. Verfahren nach Anspruch 7,
**dadurch gekennzeichnet, dass** die Betriebsparameter den Treibstoffbedarf und/oder die Abgasemissionen und/oder die Geräuschemissionen und/oder die Wärmeemissionen und/oder die Maschinenlaufzeiten in dem Gesamtsystem bestehend aus der zumindest einen Verbrennungskraftmaschine (5) und den Hilfsmaschinen (8) umfassen.

9. Verfahren nach einem der vorhergehenden Ansprüche,
**dadurch gekennzeichnet, dass** bei Motorbetrieb des Elektromotors (2) und einem Ausfall eines Stromgenerators (9) der Elektromotor (2) so schnell in den Generatorbetrieb umgeschaltet wird, dass in dem Bordnetz (10) die elektrische Bordnetzenergie ohne Blackout des Bordnetzes, vorzugsweise sogar unterbrechungsfrei, aufrechterhalten wird.

10. Schiff (1) zur Durchführung des Verfahrens nach einem der vorhergehenden Ansprüche mit
- zumindest einem Elektromotor (2) als Hauptmaschine zum Antrieb des Schiffes (1), wobei der Elektromotor (2) eine Wellenanlage (3) antreibt, die mit einem Schiffpropeller (4) gekuppelt ist,
- zumindest einer mit der Wellenanlage (3) kuppelbaren Verbrennungskraftmaschine (5), insbesondere einer Gasturbine oder einem oder mehreren Dieselmotoren, als Zusatzantrieb zur Erreichung der Höchstgeschwindigkeit des Schiffes (1),
- einem elektrischen Bordnetz (10) zur Versorgung des zumindest einen Elektromotors (2) und weiterer elektrischer Verbraucher (18) des Schiffes (1) mit elektrischer Energie
- Stromgeneratoren (9) zur Erzeugung elektrischer Energie für das Bordnetz (10),
**dadurch gekennzeichnet, dass** der zumindest eine Elektromotor (2) auch als Generator betreibbar ist, wodurch ein hinsichtlich seiner Richtung änderbarer Energiefluss (14) zwischen dem Bordnetz 10) und der Wellenanlage (3) herstellbar ist, und dass das Schiff (1) eine Steuereinrichtung (15) zur Steuerung der Richtung und Größe des Energieflusses (14) aufweist.

11. Schiff nach Anspruch 10,
**dadurch gekennzeichnet, dass** die Steuereinrichtung (15) ein Steuerprogramm mit Programmteilen zur Einstellung jeweils unterschiedlicher vorgebbarer Betriebspunkte des Gesamtsystems bestehend aus der zumindest einen Verbrennungskraftmaschine (5) und von Hilfsmaschinen (8) zum Antrieb der Stromgeneratoren (9) aufweist.

12. Schiff nach Anspruch 11,
**dadurch gekennzeichnet, dass** die vorgebbaren Betriebspunkte einen Betriebspunkt umfassen, in dem der Treibstoffbedarf des Gesamtsystems minimal ist.

13. Schiff nach Anspruch 11,
**dadurch gekennzeichnet, dass** die vorgebbaren Betriebspunkte einen Betriebspunkt umfassen, in dem die Geräuschemissionen und/oder die Wärmeemissionen des Gesamtsystems minimal sind

14. Schiff nach Anspruch 11,
**dadurch gekennzeichnet, dass** die vorgebbaren Betriebspunkte einen Betriebspunkt umfassen, in dem die Abgasemissionen des Gesamtsystems minimal sind.

15. Schiff nach Anspruch 11,
**dadurch gekennzeichnet, dass** die vorgebbaren Betriebspunkte einen Betriebspunkt umfassen, in dem die Laufzeiten der Hilfsmaschinen (8) und/oder der Verbrennungskraftmaschine (5) minimal sind.

16. Schiff nach Anspruch 10,
**dadurch gekennzeichnet, dass** die Steuereinrichtung zur Steuerung der Richtung und Größe des Energieflusses (14) steuernd auf den Betrieb des Elektromotors (2), der Verbrennungskraftmaschine (5), von Hilfsmaschinen (8) zum Antrieb der Stromgeneratoren (9), einer Kupplung (6) zwischen Verbrennungskraftmaschine (5) und Wellenanlage (3), vorzugsweise auch auf einen Verstellantrieb für die Steigung der Blätter des Schiffpropellers (4), einwirken kann.

17. Schiff (1) nach einem der Ansprüche 10 bis 16,
**dadurch gekennzeichnet, dass** es als Fregatte oder Korvette ausgebildet ist.

## Claims

1. Method for operating a ship (1) with
- at least one electric motor (2) as a main engine for propelling the ship (1), wherein the electric motor (2) propels a shaft system (3) which is coupled to a ship propeller (4)
- at least one combustion engine (5) which can be coupled to the shaft system (3), in particular a gas turbine or one or a number of diesel engines, as auxiliary propulsion in order to reach the maximum speed of the ship (1),
- an on-board electrical system (10), by means of which the at least one electric motor (2) and further electric loads (18) of the ship (1) are supplied with electrical energy and
- power generators (9) for generating electrical energy for the on-board system (10),
**characterised in that** the at least one electric motor (2) can also be operated as a generator, as a result of which an energy flow (14) which can be changed in respect of its direction can be produced between the on-board system (10) and the shaft system (3), and that by controlling the direction and magnitude of this energy flow (14), a minimum output required for the on-board system (10) is provided and at the same time the minimum propelling output required in particular situations for the propulsion of the ship is also provided here for the ship propeller (4).

2. Method according to claim 1,
**characterised in that** by controlling the direction and magnitude of the energy flow (14), the overall system consisting of the at least one combustion engine (5) and auxiliary engines (8) for the propulsion of the power generators (9) is operated at a predeterminable operating point.

3. Method according to claim 2,
**characterised in that** the predeterminable operating point is an operating point in which the fuel requirement of the overall system is minimal.

4. Method according to claim 2,
**characterised in that** the predeterminable operating point is an operating point in which the noise emissions and/or the heat emissions of the overall system are minimal.

5. Method according to claim 2,
**characterised in that** the predeterminable operating point is an operating point in which the exhaust gas emissions of the overall system are minimal.

6. Method according to claim 2,
**characterised in that** the predeterminable operating point is an operating point in which the running times of the auxiliary engines (8) and/or the combustion engine (5) are minimal.

7. Method according to claim 2,
**characterised in that** the predeterminable operating point is **characterised by** a number of operating parameters, wherein priorities are assigned to the operating parameters in each case and in the predeterminable operating point the operating parameters are optimised in the sequence of their priority.

8. Method according to claim 7,
**characterised in that** the operating parameters comprise the fuel requirement and/or the exhaust gas emissions and/or the noise emissions and/or the heat emissions and/or the engine running times in the overall system consisting of the at least one combustion engine (5) and the auxiliary engines (8).

9. Method according to one of the preceding claims,
**characterised in that** during engine operation of the electric motor (2) and failure of a power generator (9), the electric motor (2) is switched rapidly over to generator operation such that in the on-board system (10) the electric on-board system energy is retained without a black-out of the on-board system, preferably even without interruption.

10. Ship (1) for performing the method according to one of the preceding claims, with
- at least one electric motor (2) as a main engine for propelling the ship (1), wherein the electric motor (2) propels a shaft system (3) which is coupled to a ship propeller (4),
- at least one combustion engine (5) which can be coupled to the shaft system (3), in particular a gas turbine or one or a number of diesel engines, as an auxiliary propeller in order to reach the maximum speed of the ship (1),
- an on-board electrical system (10) for supplying electrical energy to the at least one electric motor (2) and further electric loads (18) of the ship (1)
- power generators (9) for generating electrical energy for the on-board system (10),
**characterised in that** the at least one electric motor (2) can also be operated as a generator, as a result of which an energy flow (14) which can be changed in respect of its direction can be produced between the on-board system (10) and the shaft system (3), and that the ship (1) has a control facility (15) for controlling the direction and magnitude of the energy flow (14).

11. Ship according to claim 10,
**characterised in that** the control facility (15) has a control program with program parts for adjusting in each case different predeterminable operating points of the overall system consisting of the at least one combustion engine (5) and auxiliary engines (8) for propelling the power generators (9).

12. Ship according to claim 11,
**characterised in that** the predeterminable operating points comprise an operating point in which the fuel requirement of the overall system is minimal.

13. Ship according to claim 11,
**characterised in that** the predeterminable operating points comprise an operating point, in which the noise emissions and/or the heat emissions of the overall system are minimal.

14. Ship according to claim 11,
**characterised in that** the predeterminable operating points comprise an operating point in which the exhaust gas emissions of the overall system are minimal.

15. Ship according to claim 11,
**characterised in that** the predeterminable operating points comprise an operating point in which the running times of the auxiliary engines (8) and/or the combustion engine (5) are minimal.

16. Ship according to claim 10,
**characterised in that** the control facility for controlling the direction and magnitude of the energy flow (14) can have a controlling effect on the operation of the electric motor (2), the combustion engine (5), auxiliary engines (8) for the propulsion of the power generators (9), a coupling (6) between combustion engine (5) and shaft system (3), preferably also on a displacement propulsion for pitching the blades of the ship propeller (4).

17. Ship (1) according to one of claims 10 to 16,
**characterised in that** it is embodied as a frigate or corvette.

## Revendications

1. Procédé pour faire fonctionner un bâtiment 1 de navigation comprenant
- au moins un moteur ( 2 ) électrique comme machine principale de propulsion du bâtiment ( 1 ), le moteur ( 2 ) électrique entraînant une installation ( 3 ) à arbre qui est accouplée à une hélice ( 4 ) du bâtiment,
- au moins une machine ( 5 ) à combustion interne, notamment une turbine à gaz ou un ou plusieurs moteurs diesel, pouvant être accouplée à l'installation ( 3 ) à arbre comme propulsion supplémentaire pour atteindre la vitesse la plus grande du bâtiment ( 1 ),
- un réseau de bord ( 10 ) électrique, par lequel le au moins un moteur ( 2 ) électrique et d'autres consommateurs ( 18 ) électriques du bâtiment ( 1 ) sont alimentés en énergie électrique et
- des génératrices ( 9 ) de courant pour la production d'énergie électrique pour le réseau de bord ( 10 ),
**caractérisé en ce que** le au moins un moteur ( 2 ) électrique peut fonctionner aussi en génératrice, grâce à quoi un flux ( 14 ) d'énergie, dont le sens peut être modifié, peut être ménagé entre le réseau de bord ( 10 ) et l'installation ( 3 ) à arbre et **en ce que**, en commandant le sens et la valeur de ce flux ( 14 ) d'énergie, on met à disposition une puissance minimum nécessaire pour le réseau de bord ( 10 ) et, en même temps également, on met à disposition de l'hélice ( 4 ) du bâtiment la puissance de propulsion minimum, nécessaire compte-tenu de la situation, à l'avance du bâtiment.

2. Procédé suivant la revendication 1,
**caractérisé en ce qu'**en commandant le sens et la valeur du flux ( 14 ) d'énergie, on fait fonctionner, en un point de fonctionnement pouvant être prescrit, tout le système constitué de la au moins une machine ( 5 ) à combustion interne et de machines ( 8 ) auxiliaires d'entraînement des génératrices ( 9 ) de courant.

3. Procédé suivant la revendication 2,
**caractérisé en ce que** le point de fonctionnement pouvant être prescrit est un point de fonctionnement où le besoin de carburant de tout le système est minimum.

4. Procédé suivant la revendication 2,
**caractérisé en ce que** le point de fonctionnement pouvant être prescrit est un point de fonctionnement où les émissions de bruit et/ou les émissions de chaleur de tout le système sont minimums.

5. Procédé suivant la revendication 2,
**caractérisé en ce que** le point de fonctionnement pouvant être prescrit est un point de fonctionnement où les émissions de gaz d'échappement de tout le système sont minimums.

6. Procédé suivant la revendication 2,
**caractérisé en ce que** le point de fonctionnement pouvant être prescrit est un point de fonctionnement où les durées de marche des machines ( 8 ) auxiliaires et/ou de la machine ( 5 ) à combustion interne sont minimums.

7. Procédé suivant la revendication 2,
**caractérisé en ce que** le point de fonctionnement pouvant être prescrit est **caractérisé par** plusieurs paramètres de fonctionnement, des priorités étant affectées respectivement aux paramètres de fonctionnement et, au point de fonctionnement pouvant être prescrit, les paramètres de fonctionnement sont optimisés dans l'ordre de leur priorité.

8. Procédé suivant la revendication 7,
**caractérisé en ce que** les paramètres de fonctionnement comprennent le besoin en carburant et/ou les émissions de gaz d'échappement et/ou les émissions de bruit et/ou les émissions de chaleur et/ou les durées de marche de machine dans tout le système, constitué de la au moins une machine ( 5 ) à combustion interne et des machines ( 8 ) auxiliaires.

9. Procédé suivant l'une des revendications précédentes,
**caractérisé en ce que**, dans le fonctionnement en moteur du moteur ( 2 ) électrique et s'il se produit une panne d'une génératrice ( 9 ) de courant, on met le moteur ( 2 ) électrique si rapidement dans le fonctionnement en génératrice que l'énergie électrique du réseau de bord est maintenue dans le réseau de bord ( 10 ) sans black-out du réseau de bord, de préférence même sans interruption.

10. Bâtiment ( 1 ) de navigation pour effectuer le procédé suivant l'une des revendications précédentes comprenant
- au moins un moteur ( 2 ) électrique comme machine principale de propulsion du bâtiment ( 1 ), le moteur ( 2 ) électrique entraînant une installation ( 3 ) à arbre qui est accouplée à une hélice ( 4 ) du bâtiment,
- au moins une machine ( 5 ) à combustion interne, notamment une turbine à gaz ou un ou plusieurs moteurs diesel, pouvant être accouplée à l'installation ( 3 ) à arbre comme propulsion supplémentaire pour atteindre la vitesse la plus grande du bâtiment ( 1 ),
- un réseau de bord ( 10 ) électrique, par lequel le au moins un moteur ( 2 ) électrique et d'autres consommateurs ( 18 ) électriques du bâtiment ( 1 ) sont alimentés en énergie électrique et
- des génératrices ( 9 ) de courant pour la production d'énergie électrique pour le réseau de bord ( 10 ),
**caractérisé en ce que** le au moins un moteur ( 2 ) électrique peut fonctionner aussi en génératrice, grâce à quoi il peut être ménagé entre le réseau de bord ( 10 ) et l'installation ( 3 ) à arbre, un flux ( 14 ) d'énergie dont le sens peut être modifié et **en ce que** le bâtiment ( 1 ) a un dispositif ( 15 ) de commande du sens et de la valeur du flux ( 14 ) d'énergie.

11. Bâtiment de navigation suivant la revendication 10,
**caractérisé en ce que** le dispositif ( 15 ) de commande a un programme de commande ayant des parties de programme pour le réglage de points de fonctionnement, pouvant être prescrits différemment, de tout le système composé de la au moins une machine ( 5 ) à combustion interne et de machines ( 8 ) auxiliaires d'entraînement des génératrices ( 9 ) de courant.

12. Bâtiment de navigation suivant la revendication 11,
**caractérisé en ce que** les points de fonctionnement pouvant être prescrits comprennent un point de fonctionnement où le besoin en carburant de tout le système est minimum.

13. Bâtiment de navigation suivant la revendication 11,
**caractérisé en ce que** les points de fonctionnement pouvant être prescrits comprennent un point de fonctionnement où les émissions de bruit et/ou les émissions de chaleur de tout le système sont minimums.

14. Bâtiment de navigation suivant la revendication 11,
**caractérisé en ce que** les points de fonctionnement pouvant être prescrits comprennent un point de fonctionnement où les émissions de gaz d'échappement de tout le système sont minimums.

15. Bâtiment de navigation suivant la revendication 11,
**caractérisé en ce que** les points de fonctionnement pouvant être prescrits comprennent un point de fonctionnement où les durées de marche des machines ( 8 ) auxiliaires et/ou la machine ( 5 ) à combustion interne sont minimums.

16. Bâtiment de navigation suivant la revendication 10,
**caractérisé en ce que** le dispositif de commande du sens et de la valeur du flux ( 14 ) d'énergie peut agir en les commandant sur le fonctionnement du moteur ( 2 ) électrique, de la machine ( 5 ) à combustion interne, des machines d'entraînement des génératrices ( 9 ) de courant, d'un accouplement ( 6 ) entre la machine à combustion interne et l'installation ( 3 ) à arbre, de préférence aussi sur un entraînement de réglage du pas des pales de l'hélice ( 4 ) du bâtiment.

17. bâtiment de navigation suivant l'une des revendications 10 à 16,
**caractérisé en ce qu'**il est constitué en frégate ou en corvette.
